# EUROPEAN PATENT SPECIFICATION

(11) **EP 0 593 481 B1**
(45) Date of publication and mention of the grant of the patent: **16.10.1996**
(21) Application number: 91917562.0
(22) Date of filing: 30.09.1991
(51) Int. Cl.: G05B 15/00, B66F 9/00

(54) **A DEVICE FOR HANDLING A PLURALITY OF CONTAINERS**
VERFAHREN ZUR HANDHABUNG VON MEHREREN BEHÄLTERN
DISPOSITIF SERVANT A MANIPULER UNE PLURALITE DE RECIPIENTS

(30) Priority: 28.09.1990 SE 9003110
(43) Date of publication of application: 27.04.1994
(73) Proprietor: NDC NETZLER & DAHLGREN CO. AB, S-430 40 Särö (SE)
(72) Inventor: ELIASSON, Roy, S-430 90 Öckerö (SE)
(74) Representative: Mossmark, Anders
(86) International application number: SE9100657
(87) International publication number: WO9206419

(56) References cited:
- EP-A- 0 428 160
- GB-A- 1 124 431
- US-A- 4 669 047

## Description

### Technical field:

The present invention relates to a device for handling a plurality of containers in which goods are transferred between various stations in a production- or treatment process which includes at least one stage with a critical process time interval.

### Background of the invention:

In production- or treatment processes which include stages with a critical process time interval, such as during the production of dough for bakery products, a predetermined average process time for the stage in question has, according to a know solution, been chosen and which applies for all the constituents in a continuous production series, or alternatively the process time interval has been varied which in turn has affected the total process time for the production or treatment in question. For certain processes, such as with the fermentation of dough for bakery products, the process time is particularly critical for the final results, which is why the conventional method of transferring the dough manually or on conveyor belts and in carousels leads to difficulties in achieving good results. Conveyors of the roll conveyor type which can be found within bakery production imply difficulties and costs to meet the very high hygiene requirements within the bakery industry. Conveyors of the roll-type also worsen the possibility to quickly effect changes to the production process which require physical movement of machinery and which permanently occupy large areas of floor-space.

The object of the present invention is to eliminate the above mentioned drawbacks and to provide a device which allows consideration of critical process time intervals which can easily be adapted from batch to batch and also from container to container and which also satisfies the strict requirements for hygiene and flexibility.

### Summary of the invention:

Said object is achieved by means of a device according to the present invention, which is characterized in that within the device are included a number of automatically controlled cars and a control system for controlling both the movement pattern of the cars and the handling of the containers, in that one of said positions is an intermediate storage site for temporary storage of the containers during said critical process time interval, and that the cars are adapted to be controlled by the control system for i.a. collecting each individual container or group of containers for which the critical process time interval has expired and for transferring these to another chosen position for continued handling.

### Brief description of the drawings:

The invention will be described in more detail in the following by way of example with reference to the attached drawings in which Fig. 1 schematically shows a device according to the invention, Figs. 2 and 3 schematically show a first example of an automatically controlled car included in the device according to the invention, whilst Figs. 4 and 5 schematically show a second example of a car.

### Best mode of carrying out the invention:

The chosen application example relates to a production process for the production of an intermediate product within the food industry, more precisely the industrial bakery field, namely production of dough for bread production. The production occurs batchwise in containers, normally called bowls, which are transferred between various stations for the addition of ingredients, mixing, fermenting, emptying etc. The device is based on a so called AGV-system, which is chiefly built up of two main parts, a stationary part and an AGV-unit, i.e. the car unit. The initials AGV stand for Automatically Guided Vehicles or cars which can made to follow a chosen path and a chosen movement and treatment pattern to form an active part in the treatment and production process. The process can also be carried out semi-automatically with possibilities to function in a man-machine relationship, for example during a transition period to gradually move over to a fully automatic process. The AGV-system is computer-based and can include one or more computers for the stationary part as well as vehicle-bound computers. The system can be subordinate to a computer for controlling the entire production process. The transfer path or paths can be determined by a control loop which emits a control signal for positional control of the cars. As described in more detail below, use is made of suitable local communication points for other control instructions for the cars' action and handling of the bowls. The loop is, for example, of inductive type and may transmit information to vehicle-bound aerials, which convert the signals to manoeuvre signals to guide and drive servos and possibly also manoeuvre functions for the bowls.

The cars' displacement can alternatively be effected with other means, such as the vehicles emitting a sweep signal which is reflected from fixed reference points and received in a receiver on the vehicle which can detect the distance and angle to each reference point and thereby compute the position of vehicle. By comparison in the computer with a stored driving order and a map of the area, the vehicle can be guided (by means of servo-units) for transfer between various stations. The sweep signal is for example of the optical type, i.e. laser, which gives a well defined beam. Examples of such a system are described in SE 8504299-2. Alternatively, the paths can be optically laid in the form of fixed beams, whereby the vehicles' positions are detected by a detector which recognizes the position in a coordinate system in the detector provided on the vehicle which then give correction signals to the servo-unit.

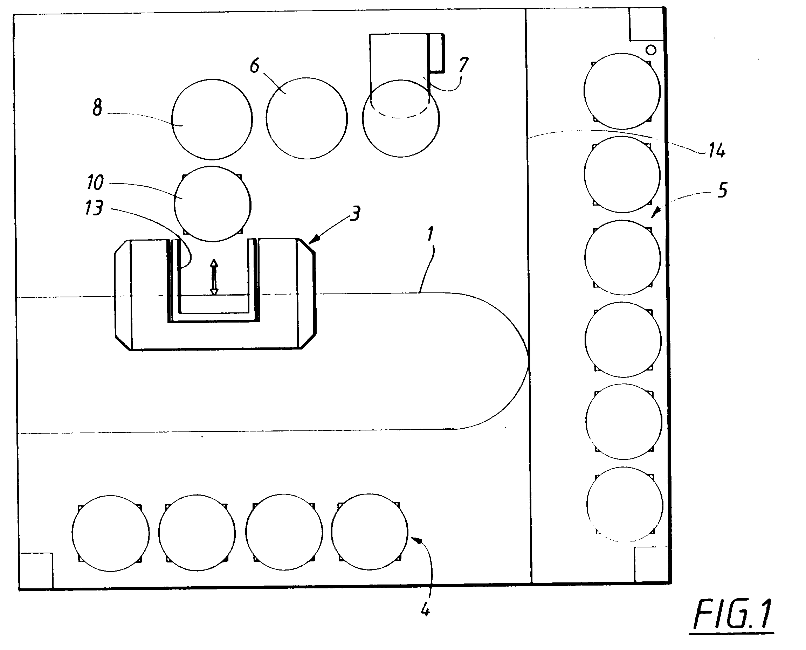

With more detailed reference to Fig. 1, an example with so called loop control is shown in which a guide loop 1 is placed in the floor 2, upon which one or more AGV-cars 3 are intended for displacement between various stations 4, 5, 6, 7 and 8. A plurality of containers in the form of dough bowls are included in the device, which bowls are intended to contain goods to be processed, which in the shown example in the process's final stage is dough.

In the shown example the processing stations comprise a collection site 4 for empty dough bowls 9, a filling station 6 for measuring and addition of ingredients, such as flour and other ingredients, a mixing station 7 for mixing the ingredients where mixing can take place with controlled speed and can be controlled in cooperation with other parameters in the system. According to the invention, a type of intermediate storage station 5 is arranged for intermediate storage of a plurality of bowls to be submitted to a certain process step, in this case fermentation. The fermentation period is very critical for the final result and the fermentation period is inputted for each batch or series of batches depending on the recipe which is chosen, together with other conditions which affect the fermentation time, such as local temperature etc. Thus, the fermentation time may be either pre-set by selecting a time period from past experience or provided by sensors at the fermentation station 5 on each individual bowl. For example the level in the bowl can be measured, as can any of the parameters upon which fermentation depends such as carbon dioxide content or similar. A further station is shown in Fig. 1, i.e. a tipping station 8 for tipping out the contents of the bowl 10 brought forward by the car 3 in question. This bowl contains fermented dough for further treatment.

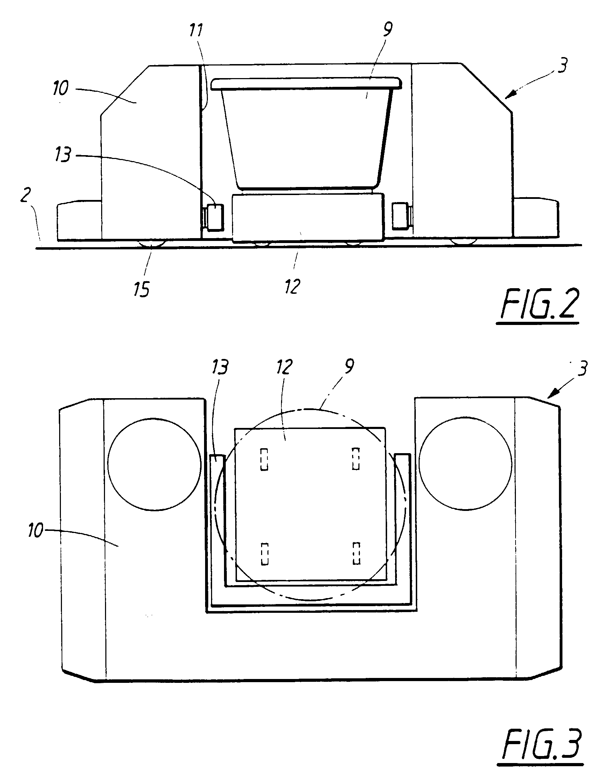

In Figs. 2 and 3 there is shown a first example of the construction of a car 3 and a bowl 9. The car is supported on three or four wheels and the number of steerable wheels is dependent upon the chosen wheel layout. In the shown example the car 3 is in the form of a U-shaped frame 10 when seen from above which is open above and below and also at one side to delimit a space 11 for a bowl 9 which is fixed to, rests on, or is removable from, a platform 12 which can similarly be provided with wheels. A fork 13 is provided in the space 11, which fork has two prongs in the form of two clamp prongs which are displaceable towards and away from each other for clamping and releasing the platform part 12 of the bowl 9. The fork prongs 13 are in addition displaceable out of and into the space 11 for moving the bowl between a location externally of the car at respective stations and the location in the space 11 within the car.

As mentioned previously, each car presents communication units in the form of aerials for both sending and receiving signals so that bidirectional communication can be maintained between the fixed control system and the cars. The fixed control system has, according to a preferred embodiment, a plurality of communication points with send and receive aerials laid in the floor along the loop to provide, for example, start and stop instructions to the cars as well as handling instructions relating to the handling of the bowls, i.e. collection and delivery at the respective work stations. The system is furthermore advantageously provided with an identification system so that each individual bowl can identified for the case, for example, in which parallel handling of bowls with different contents takes place. The identification system thus includes a read unit on each car and a code-unit on each bowl or associated platform which may, for example, display a fixed code corresponding to a serial number for the bowl. By inputting to the data-system data concerning the contents of a bowl with a certain serial number, the contents can thus be identified and the treatment of the bowl in question controlled according to a previously inputted programme. The fermentation times are inputted into the computer-system so that a certain bowl will be collected at a certain instance in time determined either after a preprogrammed time instance or after a sensor signal from a fermentation sensor, thereby initiating car-allocation to the bowl in question. This occurs by searching out the bowl either by a continuous reading along the row of bowls along the station 5 at the loop region 14 or by always placing bunkers with certain serial numbers in a predetermined position at the fermentation site. Collected bowls are accordingly then transferred to a chosen station for the next treatment stage. The guiding and propulsion of the car can be carried out in a conventional manner by driving one or more of the cars wheels 11, which are pivotable via servo units. In principal it is sufficient that one wheel is actively steered by the servo unit though, according to a preferred embodiment, two diagonally positioned wheels are driven and pivoted such that the car can be swung around "on the spot". A special case for the handling of dough bowls arises when the floor in a region is to be cleaned. The car is hereby commanded via signals from the fixed computer or via push-buttons on a control panel on the car to move all the bowls from one region to another and thereafter to return them to their initial positions.

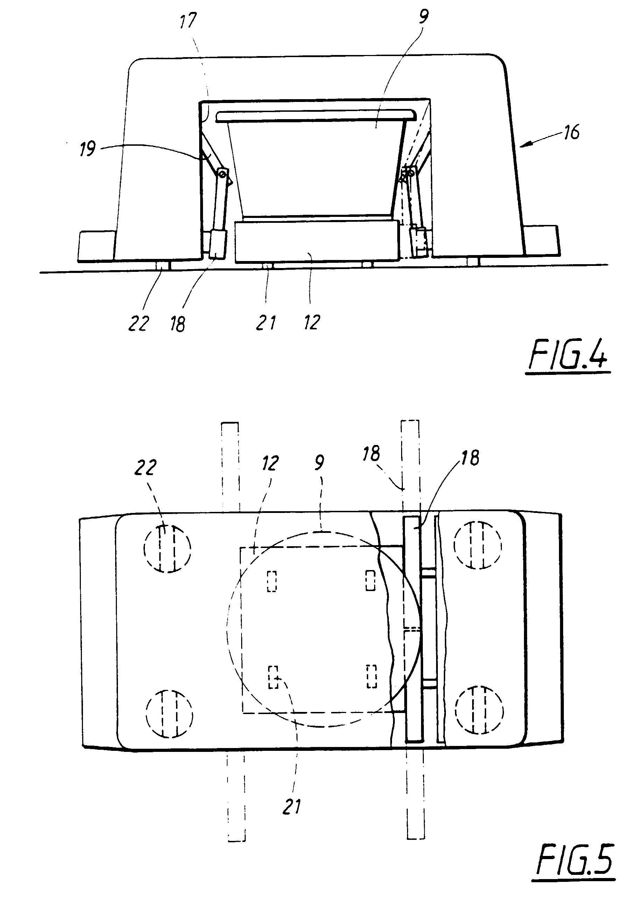

A second example of a car 16 is shown in Figs. 4 and 5. The car is constructed as a U-shaped unit which straddles the bowl 9 and the platform 12. The car thus delimits a through-tunnel 17 which is so dimensioned that the platform with its corresponding bowl can pass into and out of the tunnel from two sides of the car. The car therefore need not have any physical front or rear side, but can be symmetrical in this respect.

The car's collection and release device are arranged to work such that the mechanism's carrier levers 18 can move between an inner position in the tunnel which is shown with solid lines in Fig. 5, and an outer position extending out of either of the car's two sides for collection or release of a platform 12 with bowl 9, as shown in dashed lines in Fig. 5.

The carrier levers 18 are further adjustable between a maximum separated position of the levers 18 for each pair (see the dashed position to the right in Fig. 4) and an extended clamping position in which the carrier levers 18 securely clamp the platform 12 by means of the levers contacting two opposite sides of the platform. The separated position is adopted during the levers' 18 longitudinal displacement between the inner and the outer position and during releasing of the bowl 9. The clamping position is adopted when the bowl is to be moved both during the longitudinal movement of the levers and during the movement of the platform 12 with the bowl between various positions in the premises. According to the shown embodiment, the platform is moved by means of the car, the platform being supported by its own wheels 21 on the floor. It is also conceivable that the platform 12 be moved without wheels in contact with the floor, whereby the levers or the entire car in the clamping position move upwardly in order to lift the platform, which is thereby carried by the car. The switching of the levers to and from the clamping position can be achieved by means of, for example, suitable link rods 19.

The invention is not restricted to that described above or shown in the drawings. For example, the cars can be used for other processes with different process stages in which the process components are handled batchwise and the process time for certain stages can vary.

## Claims

1. A device for handling a plurality of containers (9, 10) in which goods are transferred between various positions (4-8) for a batchwise handling in a production or treatment process which includes different process stages of which at least one stage having a critical process time interval, **characterized in** that the device includes at least an automatically controlled car (3, 16) and a control system for controlling both the movement pattern of the car and the handling of the containers (9, 10), in that one of said positions is an intermediate storage site for temporary storage of the containers during said stage having a critical process time interval and that the car is adapted to be guided for i.a. collecting of each individual container or group of containers for which the critical process interval has expired and for transferring these to another chosen position for continued handling.

2. Device according to claim 1,
**characterized in** that the device includes means for measuring parameters other than time, for example temperature, carbon dioxide content of the goods under treatment, and for influencing said process stage.

3. Device according to claim 1,
**characterized in** that the car (3/16) is provided with means (13/18, 19) to grip the containers (9).

4. Device according to claim 3,
**characterized in** that the device includes a carrier unit (12) for each container (9), the carrier units being separate units with respect to the car and are arranged to be gripped, moved by the car and released at a predetermined position.

5. Device according to claim 4,
**characterized in** that the carrier units (12) are provided with wheels which support the carrier unit on the same surface as the cars.

6. Device according to claim 4,
**characterized in** that the car (16) is provided with a tunnel like space (17) which is open at two ends for collecting and releasing a container (9).

7. Device according to claim 6,
**characterized in** that said carrier means (18, 19) are in the form of levers, which are displaceable out of and into said tunnel between a collection position and a release position as well as a transport position for the containers (9) and also between a clamping position and a released position for the containers (9).

8. Device according to claim 4,
**characterized in** that each carrier unit (12) carries an identification marking and that the car (3/16) has a reader unit for reading said marking for guiding the car.

## Patentansprüche

1. Vorrichtung zur Handhabung von mehreren Behältern (9, 10), in denen Waren zwischen verschiedenen Stellungen bzw. Positionen (4 - 8), für eine stapelweise Handhabung in einem Herstellungs- oder Bearbeitungsprozeß befördert werden, welcher verschiedene Prozeßschritte umfaßt, von denen wenigstens ein Schritt ein kritisches Prozeß-Zeitintervall aufweist, dadurch gekennzeichnet, daß die Vorrichtung wenigstens einen automatisch gesteuerten Wagen (3, 16) und ein Steuersystem zur Steuerung sowohl des Bewegungsmusters des Wagens als auch der Handhabung der Behälter (9, 10) enthält, daß eine der Stellungen eine Zwischen-Speicherstelle zur vorübergehenden Speicherung der Behälter während des Schrittes mit einem kritischen Prozeß-Zeitintervall ist, und daß der Wagen unter anderem zum Sammeln jedes einzelnen Behälters oder Gruppen von Behältern, für welchen bzw. für welche das kritische Prozeß-Intervall abgelaufen ist, und zum Befördern dieses bzw. dieser Behälter zu einer anderen ausgewählten Stellung für eine fortgesetzte Handhabung lenkbar ist.

2. Vorrichtung nach Anspruch 1,
dadurch gekennzeichnet,
daß die Vorrichtung eine Einrichtung zur Messung anderer Parameter als Zeit enthält, beispielsweise der Temperatur, des Kohlenstoffdioxidgehaltes der sich in Bearbeitung befindlichen Waren und zur Beeinflussung des Prozeß-Schrittes.

3. Vorrichtung nach Apruch 1,
dadurch gekennzeichnet,
daß der Wagen (3/16) mit einer Einrichtung (13/18, 19) zum Greifen der Behälter (9) versehen ist.

4. Vorrichtung nach Anspruch 3,
dadurch gekennzeichnet,
daß die Vorrichtung eine Transporteinheit (12) für jeden Behälter (9) enthält, wobei die Transporteinheiten in Bezug auf den Wagen getrennte Einheiten sind und derart gestaltet sind, daß sie durch den Wagen gegriffen, bewegt und an einer vorbestimmten Stellung freigegeben werden.

5. Vorrichtung nach Anspruch 4,
dadurch gekennzeichnet,
daß die Transporteinheiten (12) mit Rädern versehen sind, welche die Transporteinheit auf derselben Oberfläche wie die Wagen lagern.

6. Vorrichtung nach Anspruch 4,
dadurch gekennzeichnet,
daß der Wagen (16) mit einem tunnelähnlichen Raum (17) versehen ist, welcher an zwei Enden zur Aufnahme und zum Freigeben eines Behälters (9) offen ist.

7. Vorrichtung nach Anspruch 6,
dadurch gekennzeichnet,
daß die Trägereinrichtungen (18, 19) als Hebel ausgebildet sind, welche aus dem Tunnel heraus und in den Tunnel hinein zwischen einer Aufsammelstellung und einer Freigabestellung sowie einer Transportstellung für die Behälter (9) und ferner zwischen einer Klemmstellung und einer gelösten Stellung für die Behälter (9) verstellbar sind.

8. Vorrichtung nach Anspruch 4,
dadurch gekennzeichnet,
daß jede Transporteinheit (12) eine Identifikationsmarkierung trägt und daß der Wagen (3/16) eine Leseeinheit zum Lesen der Markierung für die Lenkung des Wagens besitzt.

## Revendications

1. Appareil de manutention de plusieurs récipients (9, 10) dans lesquels des marchandises sont transférées entre diverses positions (4-8) afin qu'elles subissent une manutention discontinue dans une opération de production ou de traitement qui comporte différentes étapes de traitement, une étape au moins ayant un intervalle critique de temps de traitement, caractérisé en ce que l'appareil comprend au moins un véhicule commandé automatiquement (3, 16) et un ensemble de commande à la fois du diagramme de déplacement du véhicule et de la manutention des récipients (9, 10), en ce que l'une des positions est un emplacement intermédiaire de stockage temporaire des récipients pendant ladite étape ayant un intervalle de temps critique de traitement, et en ce que le véhicule est destiné à être guidé afin qu'il collecte chaque récipient individuel ou groupe de récipients dont l'intervalle critique de traitement a expiré et les transfère à une autre position choisie pour la poursuite de la manutention.

2. Appareil selon la revendication 1, caractérisé en ce que l'appareil comporte un dispositif de mesure de paramètres autres que le temps, par exemple la température et la teneur en anhydride carbonique des marchandises traitées, afin qu'il ait une influence sur l'étape de traitement.

3. Appareil selon la revendication 1, caractérisé en ce que le véhicule (3/16) comporte un dispositif (13/18, 19) de serrage des récipients (9).

4. Appareil selon la revendication 3, caractérisé en ce que l'appareil comporte une unité de transport (12) de chaque récipient (9), les unités de transport étant des unités séparées du véhicule et étant destinées à être serrées et déplacées par le véhicule puis libérées à une position prédéterminée.

5. Appareil selon la revendication 4, caractérisé en ce que les unités de transport (12) ont des roues qui supportent l'unité de transport sur la même surface que le véhicule.

6. Appareil selon la revendication 4, caractérisé en ce que le véhicule (16) comporte un espace en forme de tunnel (17) qui est ouvert à deux extrémités pour la collecte et la libération d'un récipient (9).

7. Appareil selon la revendication 6, caractérisé en ce que le dispositif de transport (18, 19) est sous forme de leviers qui sont mobiles en dehors du tunnel et vers l'intérieur du tunnel entre une position collectrice et une position de libération ainsi qu'une position de transport des récipients (9), et aussi entre une position de serrage et une position de libération des récipients (9).

8. Appareil selon la revendication 4, caractérisé en ce que chaque unité de transport (12) comporte un marquage d'identification, et le véhicule (3/16) porte une unité à lecteur destinée à lire le marquage pour le guidage du véhicule.
